# EUROPEAN PATENT SPECIFICATION

(11) **EP 0 394 210 B1**
(45) Date of publication and mention of the grant of the patent: **15.06.1994**
(21) Application number: 90870005.7
(22) Date of filing: 08.01.1990
(51) Int. Cl.: F16H 9/16, F16H 37/02

(54) **Transmission unit for motor vehicles**
Kraftfahrzeuggetriebeeinheit
Transmission pour un véhicule

(30) Priority: 19.04.1989 BE 8900426
(43) Date of publication of application: 24.10.1990
(73) Proprietor: VCST, naamloze vennootschap, B-3800 Sint-Truiden (BE)
(72) Inventor: van der Hardt Aberson, Frederik Ernst Carel, B-3500 Hasselt (BE)
(74) Representative: Donné, Eddy

(56) References cited:
- EP-A- 0 086 534
- EP-A- 0 096 012
- EP-A- 0 306 852
- WO-A-85/02663
- Automotive Engineering, Vol. 95, No.4, April 1987, pages 75 - 77

## Description

This invention relates to a transmission unit for motor vehicles, more especially a transmission of the type that consists of shifting means for selecting the driving direction and a continuous variable driving belt transmission coupled there with. A transmission unit of the generic type is known from "Automotive Engineering, April 1987, pages 75 to 77".

With the transmission unit of the aforementioned type until now it is customary that from the flywheel working together with a long thin hollow drive shaft the latter is provided for powering the likewise customary oil pump which provides the oil pressure which is necessary at least for adjusting the continuous variable driving belt transmission. Among others because of the disposition of the oil pump the known transmission unit needs a large installation length. Moreover the long thin shaft is very vulnerable and it demands an alignment and mounting on bearings such to ensure good seals in favour of the oil supply to the primary servocylinder of the continuous variable driving belt transmission. Such a hollow shaft is furthermore very expensive.

The present invention has a transmission unit for motor vehicles as object which further develops the generic transmission unit.

The invention has at the same time a transmission unit as object which has shifting means for selecting the driving direction - also called DNR-shifting (Drive-Neutral-Reverse), which allows that the oil pump be powered by these means and in this way can be lodged in the housing of the transmission unit. Likewise, according to the invention the oil pump is so coupled to the shifting means, that without additional components, such as transmissions, it becomes possible to optimise the number of revolutions of the pump in favour of noise, efficiency or capacity. The positioning of the oil pump according to the present invention moreover permits a free choice of the transmission layout.

It is clear that in all the embodiments described hereafter the oil pump is always powered by the engine without intervention of the drive clutch, such because this is necessary to assist the powering of the servocylinders of the continuous variable driving belt transmission.

In order to achieve the aforementioned results the invention relates to a transmission unit for motor vehicles comprising the features as defined in claim 1.

The fact that the drive clutch is positioned after the shifting means for selecting the driving direction, offers the advantage that, because of the mass of inertia of the clutch sections to be shifted, shifting is facilitated.

In a particular embodiment described for this purpose, the shifting means for selecting the driving direction are, also according to the invention, likewise used as toothed wheel reduction, this in order to reduce the number of revolutions of the continuous variable driving belt transmission, with as advantages that a driving belt can be utilised of which the maximum speed is limited which results in the extension of the life, that the secondary belt pulley toothed wheel can be coupled directly to the differential ring wheel through which the construction height of the transmission is decreased and that, in addition to this, an improvement of the transmission efficiency is achieved through the smaller splash losses, the lower sliding speeds of the toothed wheel reduction and the decreased build up of the centrifugal pressure in the hydraulic cylinders of the belt pulleys.

The transmission unit according to the invention moreover presents the advantage that, at least in a particular embodiment which is intended for motor vehicles with rear wheel drive, the input and output shafts lie on almost the same centre line, so that the unit can be mounted particularly easily between the engine shaft and the propeller shaft which goes to the differential situated between the rear wheels.

In order to show better the characteristics according to the present invention, some preferred embodiments are described hereafter, as examples and without any restrictive character, with reference to the enclosed drawings, in which:
figure 1 shows in cross-section a transmission unit according to the invention;
figure 2 shows a cross-section according to line II-II in figure 1;
figure 3 shows a cross-section according to line III-III in figure 2;
figure 4 shows a variant of the invention, in particular whereby the shifting means for selecting the driving direction at the same time provide for a toothed wheel reduction;
figure 5 shows a cross-section according to line V-V in figure 4;
figure 6 shows a variant of the transmission unit according to the invention, in particular whereby the input and output shafts are situated in each other's extension.

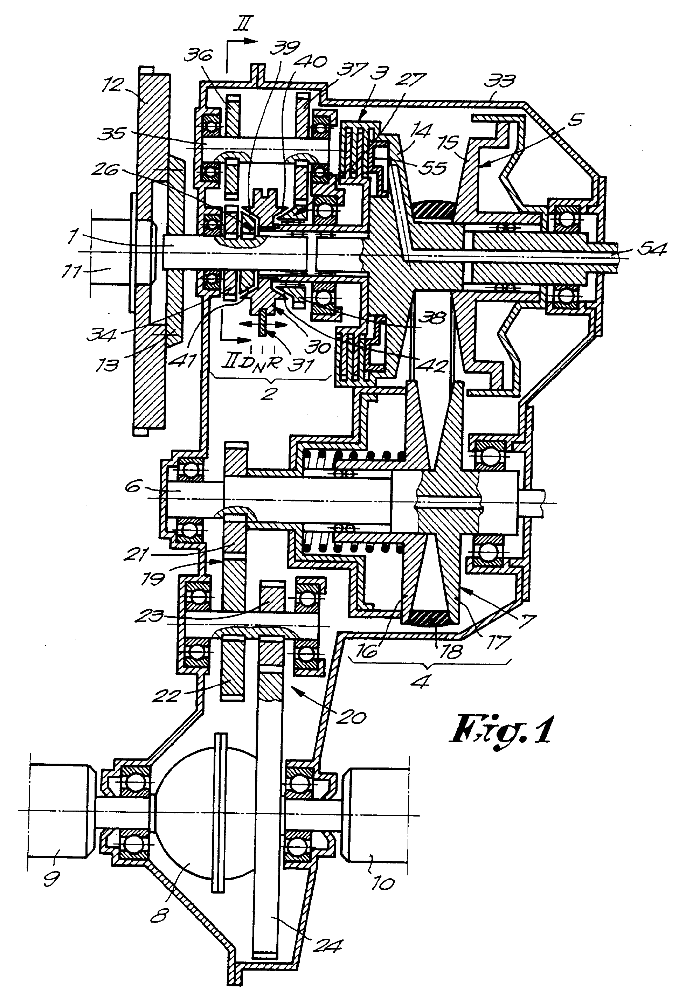

In figure 1 a transmission unit is shown which is intended for motor vehicles with front wheel drive. This transmission unit principally consists of a housing 33; an input shaft 1; shifting means 2 for selecting the driving direction or in other words a reversing unit; a drive clutch 3; and a continuous variable driving belt transmission 4 of which the primary belt pulley 5 can be connected with the shifting means 2 by means of the drive clutch 3 and whereby the output shaft 6 of the secondary belt pulley 7 provides via a differential 8 for the driving of the axles 9 and 10, which are connected to the wheels of the car.

In the embodiment shown the input shaft 1 is coupled to a shaft 11 driven by the engine, such via a flywheel 12 placed hereon and a torsional damper 13. The continuous variable driving belt transmission shows a classic construction. Each of the two belt pulleys 5 and 7 consists therefore of two belt pulley halves 14 and 15 axially movable in relation to each other, respectively 16 and 17, between which a driving belt 18 is installed which can work together by sliding the belt pulley halves 14-15 and 16-17 on different diameters, through which a variable transmission is achieved. The movement of the belt pulley halves is affected by means of one or several hydraulic cylinders, such via a suitable hydraulic control. Such controls are sufficiently known and are therefore not further treated in this description.

The output shaft 6 of the secondary belt pulley 7 is coupled to the differential 8 in a classic manner via toothed wheel reductions 19 and 20, formed by the toothed wheels 21, 22 and 23, as well as the ring wheel 24 of the differential 8.

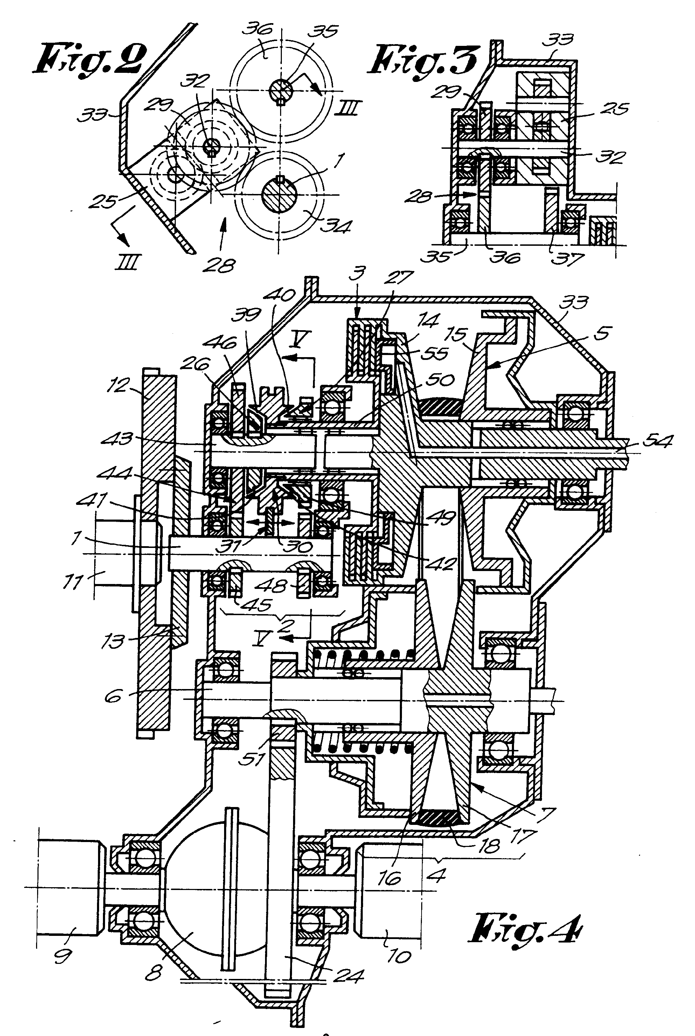

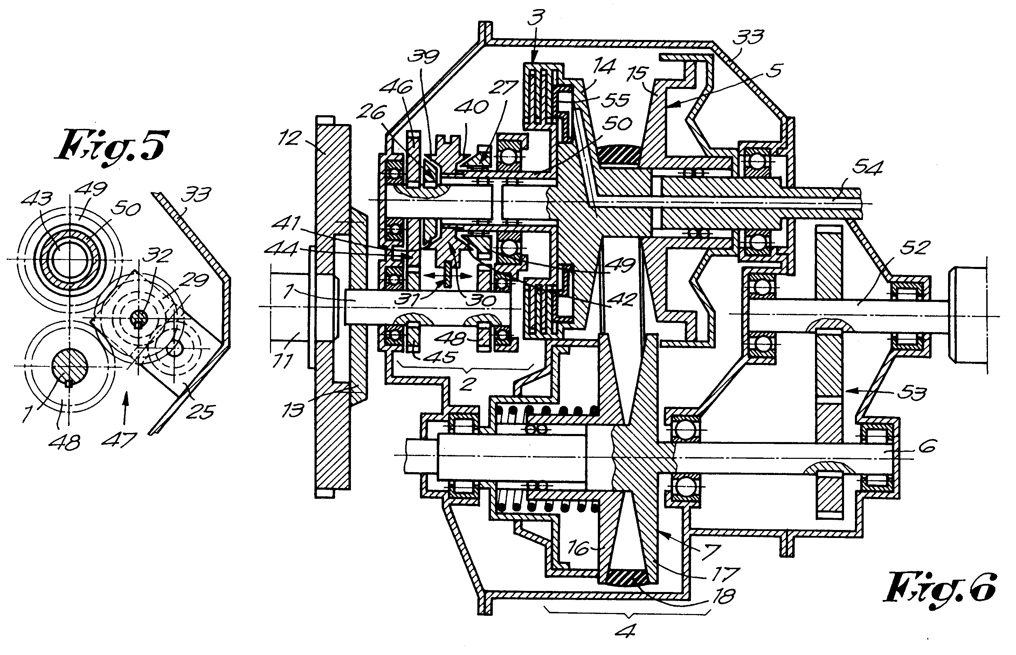

The particularity of the present invention concerns the shifting means 2, more especially the construction is such that, as shown in figures 2 and 3, the direct powering of an oil pump 25 can be provided which oil pump provides the oil pressure which is necessary at least for adjusting the continuous variable driving belt transmission 4 and possibly powering the clutch 3 or still other pressure controlled elements. As shown in figures 1, 2 and 3 the shifting means 2 for selecting the driving direction principally consist of a first clutch section 26 that in an initial direction of rotation is driven by the input shaft 1; a second clutch section 27 that is driven via a toothed gearing 28 which makes use of an intermediate toothed wheel 29 in opposite direction of rotation to the first clutch section 26 and a third clutch section 30 that can be placed in three positions via a control mechanism 31, respectively coupled with the first clutch section 26, in a neutral position or coupled with the second clutch section 27, whereby the couplings formed respectively provide for forward driving (D), a neutral position (N) and reverse driving (R). According to the present invention use is hereby made of the intermediate toothed wheel 29 to drive the aforementioned oil pump 25. The intermediate toothed wheel 29 is preferably positioned directly on the drive shaft 32 of the oil pump 25. As visible in the figures 2 and 3 this oil pump 25 is preferably a gear pump.

It is clear that the aforementioned construction offers the advantage that no long transmission shaft or separate transmission means are needed to drive the oil pump 25. The assembly can be kept very compact and the oil pump 25 in this way can be lodged in the housing 33 of the transmission unit.

The diameter of the intermediate toothed wheel 29 has no effect on the transmission ratio between the input shaft 1 and the output shaft 6. The assembly according to the invention therefore offers the advantage that the measurements of the intermediate toothed wheel 29, more especially the number of its teeth and thus the transmission ratio can be selected in relation to its driving toothed wheel 34 such that the number of revolutions of the pump is optimised in favour of noise, efficiency or capacity, so that separate transmission means must not be provided.

The shifting means described for this purpose can of course be produced according to different forms. In the embodiment according to figures 1 through 3 the first clutch section 26 is directly attached to the input shaft 1 and the second clutch section 27 is driven via respectively, the aforementioned toothed wheel 34 positioned on the input shaft 1, the intermediate toothed wheel 29 meshing herewith, a toothed wheel 36 positioned on a separate shaft section 35 driven by the intermediate toothed wheel 29, a second toothed wheel 37 positioned on this shaft section 35 and a toothed wheel 38 coupled in turn with this which is permanently connected with the second clutch section 27. The three clutch sections 26, 27 and 30 are coaxially situated, whereby the third clutch section 30 is mounted axially movable between the first and second clutch sections 26 and 27. The third clutch section 30 shows conical clutch surfaces 39 and 40 on both sides, of which one clutch surface 39 can work together with a conical clutch surface 41 provided on the first clutch section 26 through the movement of the third clutch section in one direction, while the second clutch surface 40 through the movement of the third clutch section 30 in the other direction, can work together with a conical clutch surface 42 provided on the second clutch section 27.

In the figures 4 and 5 a variant of the invention is shown, which moreover shows the characteristic that the shifting means 2 or in other words the drive-neutral-reverse shifting is used at the same time as toothed wheel reduction, all of which such that in the position of forward drive, the primary belt pulley 5 rotates at a lower number of revolutions than the input shaft 1. According to the embodiment shown in figure 4 use is made of shifting means 2 for this purpose whereby the three clutch sections 26, 27 and 30 are mounted on a shaft 43 which is situated parallel next to the input shaft. The first clutch section 26 is hereby coupled to the input shaft 1 by means of a single toothed wheel transmission 44, consisting of toothed wheels 45 and 46. The second clutch section 27 is driven via a toothed wheel transmission 47, consisting of a toothed wheel 48 positioned on the input shaft 1, a toothed wheel meshing herewith that is also indicated here with reference 29 and a toothed wheel 49 driven by the intermediate toothed wheel 29 that is connected with the second clutch section 27. The intermediate toothed wheel 29 hereby once again powers the oil pump 25. The third clutch section 30 can, as shown in the embodiment from figure 1, be connected directly to the primary belt pulley 5 via a hollow shaft 50 and the drive clutch 3.

The aforementioned toothed wheel reduction can hereby be formed by the toothed wheel transmission 44. The reduction makes it possible to utilise a driving belt 18 of which the maximum speed is limited. This decrease in the maximum number of revolutions of the belt pulleys 5 and 7 has as addition advantage an improvement of the transmission efficiency through lower splash losses, lower sliding speeds of the toothed wheel reductions and decreased build up of the centrifugal pressure in the hydraulic cylinders, which provide for the mutual movement of the belt pulley halves 14-15 and 16-17.

The decrease of the maximum number of revolutions of the continuous variable driving belt transmission 4 also allows that the secondary belt pulley 7 can be coupled directly to the ring wheel 24 of the differential via only one toothed wheel 51 positioned on the output shaft 6. Due to the absence of the toothed wheels 22 and 23 shown in figure 1 the construction height of the transmission unit is decreased.

Finally in figure 6 a variant of the transmission unit according to the invention is shown which is intended for motor vehicles with rear wheel drive. The shifting means 2 show an analogue construction as in figure 4. The particularity of this embodiment consists outside the characteristics already mentioned in that the primary belt pulley 5 and the secondary belt pulley 7 are respectively situated on both sides of the axis of the input shaft 1 and that an output shaft 52 is provided for which is driven by the secondary belt pulley 7 by means of a toothed wheel transmission 53, whereby this output shaft 52 is situated in the extension of the aforementioned input shaft 1. A propeller shaft which goes to the differential between the rear wheels can for example be connected to the output shaft 52.

It is clear that in all the aforementioned embodiments the drive clutch 3 is commanded via suitable powering means, which in the embodiment shown principally consist of a piston 55, which presses on the clutch set of the drive clutch 3, commanded via a pressure pipe 54.

## Claims

1. Transmission unit for motor vehicles comprising a housing (33), an input shaft (1), shifting means (2) to select forward or reverse drive direction, whereby said shifting means comprises a first clutch section (26) rotationally driven by the input shaft (1), a second clutch section (27) rotationally driven via a toothed gearing including an intermediate toothed wheel (29) in opposite direction to the first clutch section (26), and a third clutch section (30) movable by means of a control mechanism (31) from a neutral position to positions to be coupled either with the first clutch section (26) thus establishing forward drive or with the second clutch section (27) thus establishing reverse drive, a continuous variable driving belt transmission (4) provided with a primary belt pulley (5) receiving forward or reverse drive from said third clutch section and provided with a secondary belt pulley (7) mounted on a shaft (6) to transmit drive to wheels of the vehicle via a differential (8), a drive clutch (3) shiftable between on and off condition, and an oil pump (25) providing the oil pressure which is necessary for adjusting at least the effective diameters of said pulleys of said continuous variable driving belt transmission (4), **characterised** in that said drive clutch (3) is provided between said primary belt pulley (5) and said third clutch section (30), and in that said oil pump (25) is driven by means of said intermediate toothed wheel (29).

2. Transmission unit according to claim 1, whereby the dimensions of said intermediate toothed wheel (29), especially the number of its teeth and thus the transmission ratio, are selected in relation to its driving toothed wheel in function of the desired number of revolutions of said oil pump (25).

3. Transmission unit according to claim 1 or 2, whereby the intermediate toothed wheel (29) is positioned directly on the drive shaft (32) of the oil pump (25).

4. Transmission unit according to claim 1, 2 or 3, whereby a toothed wheel oil pump is used and lodged in said housing.

5. Transmission unit according to one of the preceding claims, whereby said first clutch section (26) is attached to said input shaft (1), whereby said toothed gearing comprises a toothed wheel (34) positioned on said input shaft meshing with said intermediate toothed wheel (29), a shaft section (35) carrying a first toothed wheel (36) meshing with said intermediate toothed wheel (29) and a second toothed wheel (37) meshing with a toothed wheel (38) which is permanently connected with said second clutch section (27).

6. Transmission unit according to one of the claims 1 to 3, whereby said first clutch section (26) is coupled to said input shaft (1) by means of a single toothed wheel transmission (44), and whereby said toothed gearing comprises a toothed wheel (48) positioned on said input shaft meshing with said intermediate toothed wheel (29) which in turn meshes with a toothed wheel (49) permanently connected with said second clutch section (27).

7. Transmission unit according to one of the claims 1,2,3,4 or 6, whereby said shifting means (2) includes a toothed wheel reduction which at least in the position for forward drive provides that the primary belt pulley (5) rotates slower than the input shaft (1).

8. Transmission unit according to claim 6, whereby said shifting means (2) includes a toothed wheel reduction which at least in the position for forward drive provides that said primary belt pulley (5) rotates slower than said input shaft (1), whereby this wheel reduction is formed by said toothed wheel transmission (44).

9. Transmission unit according to one of the claims 7 or 8, whereby a toothed wheel (51) is positioned on said shaft (6) on which said secondary belt pulley (7) is mounted, said toothed wheel (51) meshes with a ring wheel (24) attached to said differential (8).

10. Transmission unit according to one of the claims 6 or 8, whereby said motor vehicle is provided with rear wheel drive, whereby said primary belt pulley (5) and said secondary belt pulley (7) are situated respectively on both sides of the axis of said input shaft (1); and whereby an output shaft (52) is driven by said secondary belt pulley (7) by means of a toothed gearing (53), and whereby said output shaft (52) is situated coaxial to and in the extension of said input shaft (1).

11. Transmission unit according to one of the preceding claims, whereby said three clutch sections are coaxially mounted with said third clutch section (30) axially movable between said first and second clutch sections (26, 27), whereby said third clutch' section comprises conical clutch surfaces (39, 40) on both sides, due to movement of said third clutch section the one clutch surface (39) cooperates with a conical clutch surface (41) provided on said first clutch section and the other clutch surface (40) cooperates with a conical clutch surface (42) provided on said second clutch section.

## Patentansprüche

1. Kraftfahrzeuggetriebeeinheit, umfassend ein Gehäuse (33), eine Eingangswelle (1), Schaltmittel (2) zur Auswahl der Vorwärts- oder Rückwärtsfahrtrichtung, wobei besagte Schaltmittel ein erstes Kupplungsteil (26) umfassen, das durch die Eingangswelle (1) rotierend angetrieben wird, ein zweites Kupplungsteil (27), das über eine Zahnradübersetzung, welche ein Zwischenzahnrad (29) verwendet, in Gegenrichtung zur Rotation des ersten Kupplungsteils (26) rotierend angetrieben wird, und ein drittes Kupplungsteil (30), das mittels eines Steuermechanismus (31) von einer neutralen Position in Positionen bewegt werden kann, um entweder mit dem ersten Kupplungsteil (26) gekoppelt zu werden, um so den Vorwärtsantrieb einzustellen, oder mit dem zweiten Kupplungsteil (27), um den Rückwärtsantrieb einzustellen, eine stufenlos verstellbare Treibriemenübersetzung (4), ausgestattet mit einer primären Riemenscheibe (5), die den Vorwärts- oder Rückwärtsantrieb von besagtem dritten Kupplungsteil empfängt, und ausgestattet mit einer sekundären Riemenscheibe (7), montiert auf einer Welle (6) zum Übertragen des Antriebs über ein Differential 8 auf die Räder des Fahrzeugs, eine Antriebskupplung (3), die zwischen dem An- und Aus-Stand umschaltbar ist, und einer Olpumpe (25), die den Öldruck bereitstellt, der zum Einstellen zumindest der effektiven Durchmesser besagter Riemenscheiben besagter stufenlos verstellbarer Treibriemenübersetzung (4) erforderlich ist, dadurch gekennzeichnet, daß besagte Antriebskupplung (3) zwischen besagter primärer Riemenscheibe (5) und besagtem dritten Kupplungsteil (30) angeordnet ist, und daß besagte ölpumpe (25) mittels besagtem Zwischenzahnrad (29) angetrieben wird.

2. Getriebeeinheit gemäß Anspruch 1, wobei die Abmessungen besagten Zwischenzahnrads (29), insbesondere die Anzahl seiner Zähne und somit das Übersetzungsverhältnis, in Bezug auf sein Antriebszahnrad, als Funktion der gewünschten Drehzahl besagter ölpumpe gewählt werden.

3. Getriebeeinheit gemäß Anspruch 1 oder 2, wobei das Zwischenzahnrad (29) direkt auf der Antriebswelle (32) der ölpumpe (25) angebracht ist.

4. Getriebeeinheit gemäß Anspruch 1, 2 oder 3, wobei eine Zahnradölpumpe verwendet und in besagtem Gehäuse untergebracht worden ist.

5. Getriebeeinheit gemäß einem der vorgenannten Ansprüche, wobei besagtes erstes Kupplungsteil (26) an besagter Eingangswelle (1) befestigt ist, wobei besagte Zahnradübersetzung ein Zahnrad (34) umfaßt, das auf besagter Eingangswelle angebracht ist und in besagtes Zwischenzahnrad (29) eingreift, einem Wellenabschnitt (35), das ein erstes Zahnrad (36) trägt, das in besagtes Zwischenzahnrad (29) eingreift, und ein zweites Zahnrad (37), das in ein Zahnrad (38) eingreift, welches permanent mit besagtem Kupplungsteil (27) verbunden ist.

6. Getriebeeinheit gemäß einem der Ansprüche 1 bis 3, wobei besagtes erstes Kupplungsteil (26) mit besagter Eingangswelle (1) mittels einer Einzel-Zahnradübersetzung (44) verbunden ist, und wobei besagte Zahnradübersetzung ein Zahnrad (48) umfaßt, das auf besagter Eingangswelle angebracht ist und in besagtes Zwischenzahnrad (29) eingreift, das seinerseits in ein Zahnrad (49) eingreift, das permanent mit besagtem zweiten Kupplungsteil (27) verbunden ist.

7. Getriebeeinheit gemäß einem der Ansprüche 1, 2, 3, 4 oder 6, wobei besagte Schaltmittel (2) eine Zahnraduntersetzung umfassen, die zumindest in der Position für den Vorwärtsantrieb dafür sorgen, daß die primäre Riemenscheibe (5) langsamer dreht als die Eingangswelle (1).

8. Getriebeeinheit gemäß Anspruch 6, wobei besagte Schaltmittel (2) eine Zahnraduntersetzung umfassen, welche zumindest in der Position für den Vorwärtsantrieb dafür sorgen, daß besagte primäre Riemenscheibe (5) langsammer dreht als besagte Eingangswelle (1), wobei diese Zahnraduntersetzung durch besagte Zahnradübersetzung (44) gebildet wird.

9. Getriebeeinheit gemäß einem der Ansprüche 7 oder 8, wobei ein Zahnrad (51) auf besagter Welle (6) angebracht ist, auf welcher besagte sekundäre Riemenscheibe (7) montiert ist, wobei besagtes Zahnrad (51) in ein Ringrad (24) eingreift, das an besagtem Differential (8) befestigt ist.

10. Getriebeeinheit gemäß einem der Ansprüche 6 oder 8, wobei besagtes Kraftfahrzeug mit Hinterradantrieb ausgestattet ist, wobei besagte primäre Riemenscheibe (5) und besagte sekundäre Riemenscheibe (7) jeweils zu beiden Seiten der Achse besagter Eingangswelle (1) angeordnet sind; und wobei eine Ausgangswelle (52) durch besagte sekundäre Riemenscheibe (7) mittels einer Zahnradübersetzung (53) angetrieben wird, und wobei besagte Ausgangswelle (52) koaxial zu und in der Verlängerung besagter Eingangswelle (1) angeordnet ist.

11. Getriebeeinheit gemäß einem der vorgenannten Ansprüche, wobei besagte drei Kupplungsteile koaxial montiert sind, mit besagtem dritten Kupplungsteil (30) axial verschiebbar zwischen besagtem erstem und zweitem Kupplungsteil (26, 27), wobei besagtes drittes Kupplungsteil konische Kupplungsflächen (39, 40) auf beiden Seiten umfaßt, so daß infolge der Bewegung besagten dritten Kupplungsteils die eine Kupplungsfläche (39) mit einer konischen Kupplungsfläche (41) zusammenwirkt, die auf besagtem erstem Kupplungsteil vorgesehen ist, und die andere Kupplungsfläche (40) mit einer konischen Kupplungsfläche (42) zusammenwirkt, die auf besagtem zweitem Kupplungsteil vorgesehen ist.

## Revendications

1. Unité de transmission pour des véhicules à moteur, comprenant un logement (33), un arbre d'entrée (1), un moyen de déplacement (2) pour sélectionner une direction de marche avant ou arrière, par lequel ledit moyen de déplacement comprend une première section d'embrayage (26) entraînée en rotation par l'arbre d'entrée (1), une deuxième section d'embrayage (27) entraînée en rotation via un engrenage englobant une roue dentée intermédiaire (29) dans une direction opposée à celle procurée par la première section d'embrayage (26), et une troisième section d'embrayage (30) apte à se déplacer au moyen d'un mécanisme de commande (31) entre une position de point mort et des positions d'accouplement, soit avec la première section d'embrayage (26) établissant ainsi une marche avant, soit avec la deuxième section d'embrayage (27) établissant ainsi une marche arrière, une transmission continue (4) à courroie d'entraînement variable munie d'une poulie de courroie primaire (5) recevant la marche avant ou arrière provenant de ladite troisième section d'embrayage et munie d'une poulie de courroie secondaire (7) montée sur un arbre (6) pour transmettre l'entraînement aux roues du véhicule via un différentiel (8), un embrayage de commande (3) apte à se déplacer entre une position de mise en circuit et une position de mise hors circuit, ainsi qu'une pompe à huile (25) procurant la pression d'huile qui est nécessaire pour régler au moins les diamètres effectifs desdites poulies de ladite transmission continue (4) à courroie d'entraînement variable, caractérisée en ce que ledit embrayage de commande (3) est prévu entre ladite poulie de courroie primaire (5) et ladite troisième section d'embrayage (30), et en ce que ladite pompe à huile (25) est entraînée au moyen de ladite roue dentée intermédiaire (29).

2. Unité de transmission selon la revendication 1, par laquelle les dimensions de ladite roue dentée intermédiaire (29), en particulier le nombre de ses dents, partant le rapport de transmission, sont sélectionnées par rapport à sa roue dentée d'entraînement en fonction du nombre désiré de révolutions de ladite pompe à huile (25).

3. Unité de transmission selon la revendication 1 ou 2, par laquelle la roue dentée intermédiaire (29) est positionnée directement sur l'arbre d'entraînement (32) de la pompe à huile (25).

4. Unité de transmission selon la revendication 1, 2 ou 3, par laquelle on utilise une pompe à huile à roue dentée, qui est logée dans ledit logement.

5. Unité de transmission selon l'une quelconque des revendications précédentes, par laquelle ladite première section d'embrayage (26) est fixée audit arbre d'entrée (1), ledit engrenage comprenant une roue dentée (34) positionnée sur ledit arbre d'entrée en venant s'engrener avec ladite roue dentée intermédiaire (29), une section d'arbre (35) portant une première roue dentée (36) venant s'engrener avec ladite roue intermédiaire (29) et une seconde roue dentée (37) venant s'engrener avec une roue dentée (38) qui est reliée à demeure avec ladite deuxième section d'embrayage (27).

6. Unité de transmission selon l'une quelconque des revendications 1 à 3, par laquelle ladite première section d'embrayage (26) est accouplée audit arbre d'entrée (1) au moyen d'une transmission (44) à roue dentée unique et par laquelle ledit engrenage comprend une roue dentée (48) positionnée sur ledit arbre d'entrée en venant s'engrener avec ladite roue dentée intermédiaire (29) qui, à son tour, vient s'engrener avec une roue dentée (49) reliée à demeure à ladite deuxième section d'embrayage (27).

7. Unité de transmission selon l'une quelconque des revendications 1, 2, 3, 4 ou 6, par laquelle ledit moyen de déplacement (2) englobe une réduction à roue dentée qui, au moins dans la position destinée à la marche avant, fait en sorte que la poulie de courroie primaire (5) tourne plus lentement que l'arbre d'entrée (1).

8. Unité de transmission selon la revendication 6, par laquelle ledit moyen de déplacement (2) englobe une réduction à roue dentée qui, au moins dans la position destinée à la marche avant, fait en sorte que ladite poulie de courroie primaire (5) tourne plus lentement que ledit arbre d'entrée (1), cette réduction à roue étant formée par ladite transmission à roue dentée (44).

9. Unité de transmission selon l'une quelconque des revendications 7 ou 8, par laquelle une roue dentée (51) est positionnée sur ledit arbre (6) sur lequel est montée ladite poulie de courroie secondaire (7), ladite roue dentée (51) venant s'engrener avec une roue annulaire (24) fixée audit différentiel (8).

10. Unité de transmission selon l'une quelconque des revendications 6 ou 8, par laquelle ledit véhicule à moteur est muni d'une traction arrière; par laquelle ladite poulie de courroie primaire (5) et ladite poulie de courroie secondaire (7) sont situées respectivement de part et d'autre de l'axe dudit arbre d'entrée (1); par laquelle un arbre de sortie (52) est entraîné par ladite poulie de courroie secondaire (7) au moyen d'un engrenage (53); et par laquelle, ledit arbre de sortie (52) est situé en position coaxiale audit arbre d'entrée (1) et dans le prolongement de ce dernier.

11. Unité de transmission selon l'une quelconque des revendications précédentes, par laquelle lesdites trois sections d'embrayage sont montées en position coaxiale, ladite troisième section d'embrayage (30) étant axialement mobiles entre lesdites première et deuxième sections d'embrayage (26, 27), ladite troisième section d'embrayage comprenant, des deux côtés, des surfaces coniques d'embrayage (39, 40), et grâce au mouvement de ladite troisième section d'embrayage, la première surface d'embrayage (39) coopère avec une surface conique d'embrayage (41) prévue sur ladite première section d'embrayage et l'autre surface d'embrayage (40) coopère avec une surface conique d'embrayage (42) prévue sur ladite deuxième section d'embrayage.
